# EUROPÄISCHE PATENTSCHRIFT

(11) **EP 2 322 397 B1**
(45) Veröffentlichungstag und Bekanntmachung des Hinweises auf die Patenterteilung: **08.03.2017**
(21) Anmeldenummer: 10190471.2
(22) Anmeldetag: 09.11.2010
(51) Int. Cl.: B60T 17/00

(54) **Schalldämpfer**
Muffler
Silencieux

(30) Priorität: 13.11.2009 DE 102009052884
(43) Veröffentlichungstag der Anmeldung: 18.05.2011
(73) Patentinhaber: KNORR-BREMSE Systeme für Nutzfahrzeuge GmbH, 80809 München (DE)
(72) Erfinder: Riedi, Angelika, 80637, München (DE); Eidenschink, Rainer, 81927, München (DE); Ochsenkühn, Andreas, 91171, Greding (DE)
(74) Vertreter: Schönmann, Kurt

(56) Entgegenhaltungen:
- WO-A2-03/056147
- DE-U- 1 851 423
- DE-U1-202007 006 627
- US-A1- 2004 231 913
- US-B1- 6 209 678

## Beschreibung

Die Erfindung betrifft einen Schalldämpfer gemäß Oberbegriff von Anspruch 1.

Ein gattungsgemäßer Schalldämpfer ist beispielsweise aus der WO 03/056147 A2 bekannt.

Derartige Schalldämpfer werden insbesondere im Entlüftungsstrang von Druckluftanlagen verwendet, beispielsweise in Nutzfahrzeugen, die pneumatische Systeme enthalten. Sie dienen der Geräuschreduzierung, also der Absorption von durch das Ablassen von Druckluft erzeugter Schallenergie.

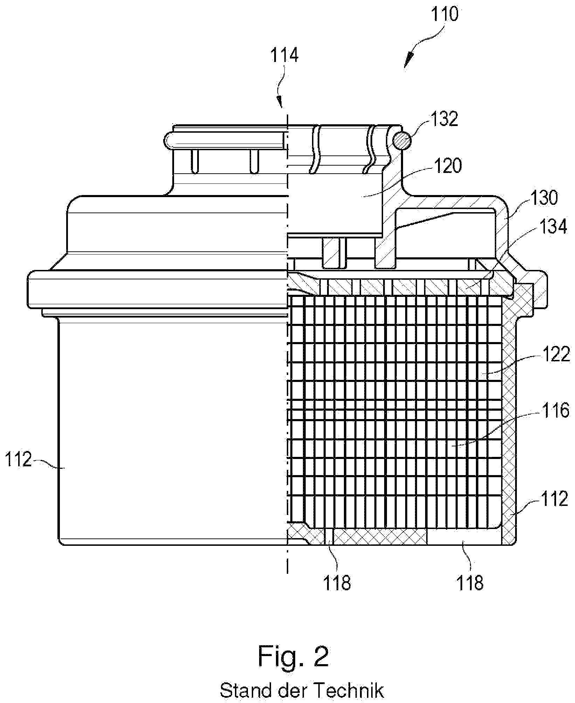

Ein Beispiel für einen Schalldämpfer des Standes der Technik ist in Figur 2 dargestellt. Der Schalldämpfer 110 wird durch ein Gehäuse 112 begrenzt. Das im Wesentlichen axialsymmetrische Gehäuse 112 hat eine Einströmöffnung 114, die in einem Gehäusedeckel 130 vorgesehen ist. Diese Einströmöffnung 114 ist durch eine Verschnappschnittstelle oder eine Verschraubung realisiert, wobei eine kraftschlüssige Verschnappung mit der fahrzeugseitigen Verrohrung durch einen Federstahlring 132 sichergestellt ist. Innerhalb des Gehäuses 112 ist Filtermaterial 116 vorgesehen, das der Absorption von Schallenergie dient. Der Strömungsbereich im Gehäuseinneren ist in einen ersten Abschnitt 120 und einen zweiten Abschnitt 122 unterteilt, wobei die Abschnitte 120, 122 durch eine Lochplatte 134 voneinander getrennt sind. Die Lochplatte 134 stellt eine axiale Begrenzung des zweiten Abschnittes 122 des Strömungsbereiches zur Verfügung. Auf der entgegengesetzten Seite, also stromabwärts, ist der zweite Abschnitt 122 des Strömungsbereiches durch das Gehäuse 112 des Schalldämpfers 110 begrenzt. Der hierfür vorgesehene Teil des Gehäuses 112 enthält Ausströmöffnungen 118.

Aus dem pneumatischen System des Fahrzeugs in den Schalldämpfer 110 durch die Einströmöffnung 114 einströmende Druckluft wird in im Wesentlichen axiale Richtung einströmen. Die Lochplatte 134 stellt ein Hindernis für die einströmende Druckluft dar, so dass sich die Druckluft über den gesamten Radius der Lochplatte 134 verteilt und durch die Löcher in der Lochplatte 134 in den zweiten Abschnitt 122 des Strömungsbereiches, also zum Filtermaterial 116, strömt. Auch in dem zweiten Abschnitt 122 findet eine im Wesentlichen axiale Strömung statt. Nach vollständigem Durchtritt der Druckluft durch das Filtermaterial 116 kann diese zum Zwecke der Entlüftung durch die Ausströmöffnungen 118 in die Atmosphäre entlassen werden.

Um eine möglichst gute Geräuschreduzierung sicherzustellen, ist dafür zu sorgen, dass die den Schalldämpfer durchströmende Druckluft einen möglichst langen Weg durch ein geeignetes Filtermaterial zurücklegt. Dabei gilt, dass dichtes Filtermaterial die Geräuschreduzierung verbessert; allerdings wird auch der Staudruck erhöht, wodurch längere Entlüftungszeiten erforderlich werden. Der erhöhte Staudruck führt auch zu einer erhöhten Kraft auf die Schnittstellen im pneumatischen System, insbesondere auf die mittels Federstahlring unterstützte Verschnappung des Schalldämpfers an der fahrzeugseitigen pneumatischen Verrohrung. Alternativ ist es möglich, zur Geräuschreduzierung gröberes Filtermaterial zu verwenden, die Menge des Filtermaterials allerdings zu erhöhen. Dies führt letztlich zu den selben Problemen, und die Materialkosten des Schalldämpfers werden erhöht. Außerdem können sowohl durch eine Verdichtung des Filtermaterials als auch durch eine Erhöhung der Filtermaterialmenge Verunreinigungen des Filtermaterials durch Öl und Schmutzpartikel auftreten, was wiederum eine Erhöhung des Staudrucks bewirkt. Zusätzlich kann hierdurch mit einer Verringerung der Lebensdauer des Schalldämpfers gerechnet werden. Weiterhin ist zu berücksichtigen, dass bei den Schalldämpfern des Standes der Technik, das heißt insbesondere bei dem in Figur 2 dargestellten Schalldämpfer, eine ungleiche Verteilung der Strömung über das Filtermaterial 116 stattfindet. Folglich ist mit einer ungenügenden Ausnutzung der schallabsorbierenden Kapazität des Filtermaterials zu rechnen. Eine weitere einfache Lösung zur Verbesserung der Geräuschreduzierung wäre die Vergrößerung des Schalldämpfers. Aber hier sind ebenfalls Grenzen zu erkennen, denn eine Vergrößerung erhöht die Material- und Fertigungskosten. Ferner steht der Vergrößerung der grundsätzliche Wunsch nach einer Bauraumminimierung entgegen.

Der erfindungsgemäße Schalldämpfer ist ein kostengünstiger Schalldämpfer, der eine verbesserte Geräuschreduzierung unter zumindest teilweiser Umgehung der vorstehend genannten Probleme bewirkt.

Der Erfindung liegt die Aufgabe zugrunde, die Montage des Filtermaterials an der Befestigungseinrichtung zu erleichtern und zuverlässig zu gestalten.

Diese Aufgabe wird mit den Merkmalen des unabhängigen Anspruches gelöst.

Vorteilhafte Ausführungsformen der Erfindung sind in den abhängigen Ansprüchen angegeben.

Bei dem gattungsgemäßen Schalldämpfer ist vorgesehen, dass eine Umlenkeinrichtung vorgesehen ist, die eine Umlenkung der Axialströmung durch den ersten Abschnitt des Strömungsbereiches in eine Radialströmung durch den zweiten Abschnitt des Strömungsbereiches bewirkt. Während bei einigen Schalldämpfern des Standes der Technik die Strömung der Druckluft durch den Schalldämpfer im Wesentlichen axial erfolgt - lediglich zur Verteilung der Druckluft auf den gesamten Schalldämpferquerschnitt findet eine Strömung mit radialer Komponente statt - ist vorgesehen, nach axialem Einströmen der Druckluft eine quasi vollständige Umlenkung der Strömungsrichtung in radiale Richtung zu bewirken. Das Filtermaterial, welches in dem radial durchströmten zweiten Abschnitt des Strömungsbereiches angeordnet ist, wird auf diese Weise gleichmäßig durchströmt. Es gibt keine strömungsungünstigen Bereiche mehr.

Die Erfindung ist in besonders bevorzugte Weise dadurch weitergebildet, dass das Gehäuse einen mit der Einströmöffnung ausgestatteten Gehäusedeckel aufweist und dass die Einströmhülse einstückig mit dem Gehäusedeckel ausgebildet ist. Die Einströmhülse kann sich über die gesamte axiale Länge des Schalldämpfers erstrecken, so dass die gesamte Bauhöhe des Schalldämpfers zur Geräuschreduzierung ausgenutzt wird.

In diesem Zusammenhang ist es besonders bevorzugt, dass die Umlenkeinrichtung durch den ersten Abschnitt mit dem zweiten Abschnitt verbindende Öffnungen in der Einströmhülse realisiert ist. Dabei handelt es sich um eine besonders einfache Möglichkeit, die axiale Einströmrichtung der Druckluft in eine Radialströmung umzulenken.

Gemäß einer besonders bevorzugten Ausführungsform der Erfindung ist vorgesehen, dass das Gehäuse einen mit der Einströmöffnung ausgestatteten Gehäusedeckel aufweist und dass die Einströmhülse einstückig mit dem Gehäusedeckel ausgebildet ist. Hierdurch wird kein zusätzliches Bauteil erforderlich, und es müssen keine Maßnahmen ergriffen werden, um eine druckdichte Verbindung zwischen dem Gehäusedeckel mit Einströmöffnung und der Einströmhülse herzustellen.

Es ist vorgesehen, dass das Filtermaterial zumindest teilweise auf die Einströmhülse gewickelt ist. Bei der Fertigmontage des Schalldämpfers wird also nicht mit einer zusätzlichen Filterpatrone gearbeitet werden. Vielmehr bilden Gehäusedeckel, Einströmhülse und Filtermaterial eine Einheit, die in den Gehäusetopf eingesetzt beziehungsweise auf diesen aufgesetzt werden kann.

Erfindungsgemäß ist vorgesehen, dass die Einströmhülse eine Befestigungseinrichtung aufweist, die geeignet ist, einen Endbereich einer auf die Einströmhülse zu wickelnden Filterbahn zu halten. Diese Besonderheit betrifft die Vormontage der Einheit aus Gehäusedeckel, Einströmhülse und Filtermaterial. Eine Befestigungseinrichtung erleichtert die zuverlässige Montage des Filtermaterials an der Einströmhülse.

Erfindungsgemäß ist entweder vorgesehen, dass die Befestigungseinrichtung durch Mitnehmerhaken realisiert ist, oder
dass die Befestigungseinrichtung durch mindestens einen, vorzugsweise zwei sich in axialer Richtung erstreckende Schlitze in der Einströmhülse realisiert ist.

Gemäß einer bevorzugten Ausführungsform der Erfindung ist vorgesehen, dass eine Vielzahl an Ausströmöffnungen vorgesehen ist, die ein Ausströmen des gasförmigen Mediums in eine radiale Richtung gestatten. Es ist aber auch denkbar, dass der Gehäusetopf Öffnungen aufweist, die sich in axialer Richtung erstrecken. Mit anderen Worten, es können Öffnungen in der Gehäuseseitenwand und/oder Gehäusebodenplatte vorgesehen sein.

Bei einer weiteren Ausführungsform kann vorgesehen sein, dass die Einströmhülse an ihrem stromabwärts gelegenen Ende verschlossen ist. Dies verhindert, dass axial einströmende Druckluft aus der Einströmhülse direkt über eine einheitlich gelochte Gehäusebodenplatte ausströmen könnte. Hierdurch ist es möglich, jegliche Gehäusebodenplatten zu verwenden. Alternativ kann auch vorgesehen sein, die Gehäusebodenplatte nur in den Bereichen mit Ausströmöffnungen auszustatten, die eine Begrenzung des mit Filtermaterial gefüllten zweiten Strömungsbereiches bilden. Dann kann die Einströmhülse an ihrem stromabwärts gelegenen Ende offen sein.

Die besonderen Vorteile der Erfindung und ihrer bevorzugten Ausführungsformen bestehen also darin, dass zur Optimierung der Geräuschreduzierung die einströmende Luft zentral durch eine gelochte Wickelhülse, die in den Gehäusedeckel integriert ist, über die gesamte Höhe des Schalldämpfers geführt wird. Die Luft wird dadurch strömungsoptimiert durch die gesamte Breite der Filterpatrone nach außen zu den Entlüftungsöffnungen des Gehäuses geführt. Strömungsungünstige Bereiche werden dadurch verhindert und die gesamte Baugröße wird optimal zum Schallabbau genutzt. Durch die strömungsoptimierte Gestaltung verringert sich bei Verwendung einer gleichbleibenden Menge an Filtermaterial der Staudruck. Unter Berücksichtigung der Kosten ist eine Schallreduzierung dadurch möglich, dass bei heutigem Staudruckniveau mehr Filtermaterial verbaut werden kann. Weiterhin erreicht man durch die strömungsoptimierte Gestaltung, dass sich keine Gebiete ausbilden, in welchen sich das Filtermaterial verstärkt zusetzen könnte, insbesondere durch die gleichmäßige Durchströmung von innen nach außen. Dies wiederum reduziert die einsatzbedingte Staudruckerhöhung und somit die wartungsfreie Lebensdauer des Schalldämpfers. Die Endfertigung des Schalldämpfers ist besonders einfach. Der aus Gehäusedeckel mit Einströmöffnung, Einströmhülse und Filtermaterial bestehende Einsatz wird einfach in den Gehäusetopf eingesetzt. Die Verbindung zwischen den Komponenten, das heißt dem Gehäusedeckel und dem Gehäusetopf, muss druckdicht erfolgen, beispielsweise durch eine Ultraschallverschweißung oder über eine Verschnappschnittstelle.

Die Erfindung wird nun mit Bezug auf die begleitende Zeichnung anhand einer bevorzugten Ausführungsform beispielhaft erläutert.

Es zeigen:
- Figur 1: eine Schnittansicht einer bevorzugten Ausführungsform der vorliegenden Erfindung und
- Figur 2: eine teilweise geschnittene Darstellung eines Schalldämpfers des Standes der Technik.

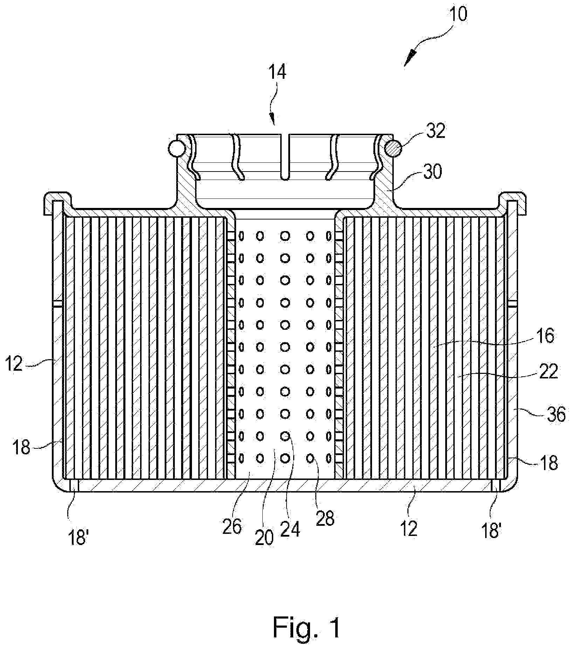

Figur 1 zeigt eine Schnittdarstellung einer Ausführungsform eines erfindungsgemäßen Schalldämpfers 10. Der Schalldämpfer 10 umfasst ein Gehäuse 12 mit einem Gehäusetopf 36 und einem Gehäusedeckel 30. In dem Gehäusedeckel 30 ist eine Einströmöffnung 14 vorgesehen. Diese Einströmöffnung 14 ist zum Verschnappen mit der fahrzeugseitigen Verrohrung ausgebildet. Um eine sichere Verschnappung zu gewährleisten, ist am Gehäusedeckel 30 ein Federstahlring 32 angeordnet. Mit dem Gehäusedeckel 30 ist ferner eine Einströmhülse 26 einstückig ausgebildet. Diese Einströmhülse 26 dient als Wickelhülse, auf die in Form einer Filterbahn vorliegendes Filtermaterial 16 aufgewickelt ist. Die Einströmhülse 26 weist Öffnungen 28 auf, die einen ersten Abschnitt 20 des Strömungsbereiches im Gehäuseinneren mit einem zweiten Abschnitt 22 des Strömungsbereiches, in dem auch das Filtermaterial 16 angeordnet ist, verbinden. Insgesamt bildet die Einströmhülse 26 zusammen mit den Öffnungen 28 also eine Umlenkeinrichtung 24 für die in den ersten Abschnitt 20 des Strömungsbereiches axial einströmende Druckluft. Die Seite des Gehäusetopfes 36 ist mit Ausströmöffnungen 18 ausgestattet, im vorliegenden Beispiel nur in dem Bereich, der den zweiten Abschnitt des Strömungsbereiches begrenzt. In diesem Fall kann die Einströmhülse 26 stromabwärts offen sein. Alternativ kann auch ein Gehäusetopf 36 mit einem gleichmäßig gelochten Gehäuseboden verwendet werden, in diesem Fall ist das stromabwärts gelagerte Ende der Einströmhülse 26 verschlossen ausgebildet.

Der Schalldämpfer 10 gemäß der bevorzugten Ausführungsform nach Figur 1 der vorliegenden Erfindung wird im Einsatz durch die Einströmöffnung 14 mit Druckluft beaufschlagt. Diese Druckluft strömt axial durch den ersten Abschnitt 20 des Strömungsbereiches, und sie strömt dann radial in den zweiten Abschnitt 22 des Strömungsbereiches und hier durch das Filtermaterial 16. Von dort aus kann die Druckluft durch die Öffnungen 18 in der Seite des Gehäusetopfes 36 abströmen. Um sicherzustellen, dass sämtliche Radialkoordinaten des zweiten Abschnittes des Strömungsbereiches, also des Strömungsbereiches mit Filtermaterial 16, gleichmäßig durchströmt werden, ist es möglich, die Ausströmöffnungen 18' im Boden des Gehäusetopfes in der Weise anzuordnen, dass das Druckgefälle im Schalldämpfer 10 hierdurch in entsprechender Weise beeinflusst wird. Ordnet man zum Beispiel größere oder zusätzliche Ausströmöffnungen 18' im radial außen liegenden Bereich des Gehäusetopfes 36 an, so wird hierdurch sichergestellt, dass auch die radial außen liegenden Wicklungen der Filterbahn durch eine entsprechende sie durchströmende Luftmenge genutzt werden. Ebenfalls wäre es denkbar, die Filterbahn inhomogen auszustatten, das heißt an verschiedenen Radien des Schalldämpfers Filtermaterial mit unterschiedlicher Porosität zu verwenden. Auch hierdurch kann die Durchströmung des Filtermaterials 16 weiter vergleichmäßigt werden.

Die in der vorstehenden Beschreibung, in den Zeichnungen sowie in den Ansprüchen offenbarten Merkmale der Erfindung können sowohl einzeln als auch in beliebiger Kombination für die Verwirklichung der Erfindung wesentlich sein.

### Bezugszeichenliste

- 10: Schalldämpfer
- 12: Gehäuse
- 14: Einströmöffnung
- 16: Filtermaterial
- 18: Ausströmöffnungen
- 18': Ausströmöffnungen
- 20: erster Abschnitt
- 22: zweiter Abschnitt
- 24: Umlenkeinrichtung
- 26: Einströmhülse
- 28: Öffnungen
- 30: Gehäusedeckel
- 32: Federstahlring
- 36: Gehäusetopf
- 110: Schalldämpfer
- 112: Gehäuse
- 114: Einströmöffnung
- 116: Filtermaterial
- 118: Ausströmöffnungen
- 120: erster Abschnitt
- 122: zweiter Abschnitt
- 130: Gehäusedeckel
- 132: Federstahlring
- 134: Lochplatte

## Patentansprüche

1. Schalldämpfer (10) mit
- einem Gehäuse (12),
- einem innerhalb des Gehäuses (12) liegenden Strömungsbereich,
- mindestens einer Einströmöffnung (14), die ein Einströmen eines gasförmigen Mediums in den Strömungsbereich gestattet,
- Filtermaterial (16), das von dem eingeströmten Medium durchströmbar ist, und
- mindestens einer Ausströmöffnung (18), die ein Ausströmen des gasförmigen Mediums aus dem Strömungsbereich gestattet,
- wobei bei bestimmungsgemäßer Verwendung des Schalldämpfers (10) eine Axialströmung des gasförmigen Mediums durch einen ersten Abschnitt (20) des Strömungsbereiches stattfindet,
- wobei ein zweiter Abschnitt (22) des Strömungsbereiches, der stromabwärts des ersten Abschnittes (20) angeordnet ist, zumindest teilweise mit Filtermaterial (16) gefüllt ist,
- wobei eine Umlenkeinrichtung (24) vorgesehen ist, die eine Umlenkung der Axialströmung durch den ersten Abschnitt (20) des Strömungsbereiches in eine Radialströmung durch den zweiten Abschnitt (22) des Strömungsbereiches bewirkt,
- wobei das Gehäuse (12) axialsymmetrisch ist,
- wobei der erste Abschnitt (20) des Strömungsbereiches durch eine zentral angeordnete, sich in axialer Richtung erstreckende Einströmhülse (26) definiert ist,
- wobei der zweite Abschnitt (22) zumindest teilweise radial außerhalb der Einströmhülse (26) angeordnet ist und
- wobei das Filtermaterial (16) zumindest teilweise auf die Einströmhülse (26) gewickelt ist,
**dadurch gekennzeichnet, dass** die Einströmhülse (26) eine Befestigungseinrichtung aufweist, die geeignet ist, bei einer Montage des Filtermaterials an der Einströmhülse einen Endbereich einer auf die Einströmhülse (26) zu wickelnden Filterbahn zu halten, wobei die Befestigungseinrichtung entweder durch Mitnehmerhaken realisiert ist oder durch mindestens einen, vorzugsweise zwei sich in axialer Richtung erstreckende Schlitze in der Einströmhülse realisiert ist.

2. Schalldämpfer (10) nach Anspruch 1, **dadurch gekennzeichnet, dass** die Umlenkeinrichtung (24) durch den ersten Abschnitt (20) mit dem zweiten Abschnitt (22) verbindende Öffnungen (28) in der Einströmhülse (26) realisiert ist.

3. Schalldämpfer (10) nach Anspruch 1 oder 2, **dadurch gekennzeichnet,**
- **dass** das Gehäuse (12) einen mit der Einströmöffnung (14) ausgestatteten Gehäusedeckel (30) aufweist und
- **dass** die Einströmhülse (26) einstückig mit dem Gehäusedeckel (30) ausgebildet ist.

4. Schalldämpfer (10) nach einem der vorhergehenden Ansprüche, **dadurch gekennzeichnet, dass** eine Vielzahl an Ausströmöffnungen (18) vorgesehen ist, die ein Ausströmen des gasförmigen Mediums in eine axiale und/oder radiale Richtung gestatten.

5. Schalldämpfer (10) nach einem der Ansprüche 1 bis 4, **dadurch gekennzeichnet, dass** die Einströmhülse (26) an ihrem stromabwärts gelegenen Ende verschlossen ist.

## Claims

1. Silencer (10), comprising
- a housing (12),
- a flow region located within the housing (12),
- at least one inflow opening (14) allowing a gaseous medium to flow into the flow region,
- filter material (16), through which the flowing-in medium can flow, and
- at least one outflow opening (18) allowing the gaseous medium to flow out of the flow region,
- wherein, if the silencer (10) is used as intended, there is an axial flow of the gaseous medium through a first section (20) of the flow region,
- wherein a second section (22) of the flow region located downstream of the first section (20) is at least partially filled with filter material (16),
- wherein a deflection device (24) is provided to deflect the axial flow through the first section (20) of the flow region into a radial flow through the second section (22) of the flow region,
- wherein the housing (12) is axially symmetric,
- wherein the first section (20) of the flow region is defined by a centrally located inflow sleeve (26) extending in the axial direction,
- wherein the second section (22) is at least partially located radially outside the inflow sleeve (26), and
- wherein the filter material is at least partially wound onto the inflow sleeve (26).
**characterised in that** the inflow sleeve (26) comprises a fastening device suitable for holding an end region of a filter web to be wound onto the inflow sleeve (26) when mounting the filter material on the inflow sleeve, the fastening device being represented either by driver hooks or by at least one, preferable two, slot(s) extending in the axial direction in the inflow sleeve.

2. Silencer (10) according to claim 1, **characterised in that** the deflection device (24) is realised by openings (28) in the inflow sleeve (26) which connect the first section (20) to the second section (22).

3. Silencer (10) according to claim 1, **characterised in that**
- the housing (12) has a housing cover (30) provided with the inflow opening (14), and
- the inflow opening (14) is formed in one piece with the housing cover (30).

4. Silencer (10) according to any of the preceding claims, **characterised in that** a plurality of outflow openings (18) is provided which allow the gaseous medium to flow out in an axial and/or radial direction.

5. Silencer (10) according to any of claims 1 to 4, **characterised in that** the inflow sleeve (26) is closed at its downstream end.

## Revendications

1. Silencieux (10) comprenant
- une enveloppe (12),
- une région d'écoulement se trouvant à l'intérieur de l'enveloppe (12),
- au moins une ouverture (14) d'entrée, qui autorise une entrée d'un milieu gazeux dans la région d'écoulement,
- de la matière (16) filtrante, qui peut être traversée par le milieu qui est entré et
- au moins une ouverture (18) de sortie, qui autorise une sortie du milieu gazeux de la région d'écoulement,
- dans lequel, lors d'une utilisation conforme du silencieux (10), un écoulement axial du milieu gazeux a lieu dans une première partie (20) de la région d'écoulement,
- dans lequel une deuxième partie (22) de la région d'écoulement, qui est en aval de la première partie (20), est remplie, au moins en partie, de matière (16) filtrante,
- dans lequel il est prévu un dispositif (24) de déviation, qui provoque une déviation du courant axial dans la première partie (20) de la région d'écoulement, dans une direction radiale dans la deuxième partie (22) de la région d'écoulement,
- dans lequel l'enveloppe (12) est à symétrie axiale,
- dans lequel la première partie (20) de la région d'écoulement est définie par un manchon (26) d'entrée disposé centralement et s'étendant dans la direction axiale,
- dans lequel la deuxième partie (22) est disposée, au moins en partie, radialement à l'extérieur du manchon (26) d'entrée et
- dans lequel la matière (16) filtrante est enroulée, au moins en partie, sur le manchon (26) d'entrée,
**caractérisé en ce que** le manchon (26) d'entrée a un dispositif de fixation propre, lorsque la matière filtrante est montée sur le manchon d'entrée, à maintenir une région d'extrémité d'une bande filtrante à enrouler sur le manchon (26) d'extrémité, le dispositif de fixation étant réalisé soit par des crochets d'entraîneur, soit par au moins une, de préférence deux, fentes s'étendant dans la direction axiale dans le manchon d'entrée.

2. Silencieux (10) suivant la revendication 1, **caractérisé en ce que** le dispositif (24) de déviation est réalisé par des ouvertures (28), reliant la première partie (20) à la deuxième partie (22), dans le manchon (26) d'entrée.

3. Silencieux (10) suivant la revendication 1 ou 2, **caractérisé**
- **en ce que** l'enveloppe (12) a un couvercle (30) conformé en ayant l'ouverture (14) d'entrée et
- **en ce que** le manchon (26) d'entrée est constitué d'une seule pièce avec le couvercle (30) de l'enveloppe.

4. Silencieux (10) suivant l'une des revendications précédentes, **caractérisé en ce qu'**il est prévu une pluralité d'ouvertures (18) de sortie, qui autorise une sortie du milieu gazeux dans une direction axiale et/ou radiale.

5. Silencieux (10) suivant l'une des revendications 1 à 4, **caractérisé en ce que** le manchon (26) d'entrée est fermé à son extrémité en aval.
